# DEMANDE DE BREVET EUROPEEN

(11) **EP 4 464 903 A1**
(43) Date de publication de la demande: **20.11.2024**
(21) Numéro de dépôt: 24175995.0
(22) Date de dépôt: 15.05.2024
(51) Int. Cl.: F16B 7/04, F16B 7/18

(54) **SYSTÈME D ASSEMBLAGE DE DEUX PROFILÉS MÉTALLIQUES**

(30) Priorité: 15.05.2023 FR 2304783
(71) Demandeur: Cetal, 54840 Bois de Haye (FR)
(72) Inventeur: ROSIN, Florian, 54200 CHOLOY-MENILLOT (FR)
(74) Mandataire: Cabinet Bleger-Rhein-Poupon

(57) **Abrégé**

Système d'assemblage de deux profilés métalliques, où un premier profilé (1) est destiné à être solidarisé à un second profilé (2) par une mise contact de l'une de ses extrémités (10) avec une face latérale (20) du second profilé (2), cette face latérale (20) comprenant une gorge en C (21) dans laquelle est coulissée une contreplaque d'appui (4) percée d'au moins un trou (40) pour le passage d'une vis (3) destinée à être vissée dans l'extrémité d'une alvéolis (11, 12) du premier profilé (1), la contreplaque d'appui (4) étant associée à une clavette, (5) de forme et de dimensions périphériques lui permettant une insertion sans jeu, dans l'espace interne (14) de l'extrémité (10), de la clavette (5) comportant des moyens (54, 57) d'emboîtement dans la contreplaque (4) dont l'un (54) est également apte à se loger étroitement dans l'ouverture (26) de la gorge en C (21).

## Description

La présente invention a pour objet, dans le domaine de la menuiserie métallique, un système d'assemblage mécanique de profilés métalliques pour la réalisation d'un cadre.

La présente invention concerne plus particulièrement l'assemblage de profilés en aluminium ou similaire, issus d'extrusion, et notamment, mais non limitativement, dans le domaine de la fabrication de portails.

La fabrication d'un cadre de profilés extrudés nécessite d'assembler des profilés faisant entre eux des angles, dans un même plan ou non, l'assemblage le plus fréquent consistant à fixer à l'extrémité d'un profilé un autre profilé disposé transversalement, que ce soit perpendiculairement ou non.

Un tel assemblage peut être réalisé de différentes manières, lesquelles peuvent présenter, selon le résultat recherché, des avantages et des inconvénients.

On connaît ainsi, notamment par les documents DE 42 44 396 et EP 0 233 525, un système d'assemblage comprenant un connecteur qui permet de relier un profilé perpendiculairement à un autre, au travers d'un bloc coulissant préalablement solidarisé à l'extrémité d'un profilé, glissé dans la gorge en C longitudinale de l'autre profilé, puis serré dans cette dernière par pincement de ses ailes.

De tels connecteurs sont utilisés pour permettre une solidarisation facile entre eux de profilés, et surtout avec une réutilisation illimitée. Si le serrage le plus résistant est celui de la fixation du bloc coulissant à l'extrémité du profilé, l'autre serrage, celui destiné à l'assemblage des deux profilés, consiste à pincer les ailes de la gorge en C. De ce fait, ces connecteurs ne peuvent pas être utilisés pour la fabrication d'un cadre rigide, qui ne peut se contenter d'une fixation par pincement avec d'une part le risque de desserrement, donc de coulissement et donc de déformation de l'assemblage, et d'autre part le risque d'écartement des ailes de la gorge en C et l'échappement du bloc coulissant. De tels connecteurs ne sont pas faits pour la réalisation d'un cadre rigide tel que celui d'un portail, mais pour celle d'une structure d'utilisation temporaire.

Un autre inconvénient de ces connecteurs, consiste en ce que cela nécessite des profilés de forme particulière, et plus particulièrement de section carrée avec des gorges en C sur chacune des faces. En effet, le bloc coulissant étant fixé à l'extrémité d'un profilé, pour pouvoir réaliser le pincement, il faut accéder aux vis ce qui nécessite des gorges en C sur au moins deux côtés opposés.

On connaît également des systèmes d'assemblage qui consistent à adapter les profilés par usinage dans le but d'emboîtement par exemple, puis à solidariser l'ensemble par vissage et/ou soudage. Ces systèmes permettent d'obtenir des cadres d'une grande rigidité, avec toutefois pour inconvénients, d'une part de nécessiter une fabrication précise car le réglage sur site n'est plus possible, et d'autre part de rendre un démontage impossible.

On connaît également un système d'assemblage qui permet d'éviter les inconvénients précités, c'est-à-dire qu'il autorise des réglages sur site, qu'il ne nécessite pas ou peu d'opération d'usinage, qu'il est parfaitement démontable, et également qu'il est moins onéreux.

Ce système d'assemblage de deux profilés consiste à faire traverser transversalement un premier profilé par une vis, laquelle est vissée axialement dans une rainure longitudinale interne du second profilé dont l'extrémité est amenée au contact latéral du premier, ladite rainure étant tubulaire ou partiellement tubulaire de type alvéolis ou gorge de vissage, et éventuellement taraudée préalablement. Cet assemblage est complété par la mise en place d'une contreplaque d'appui en métal, qui peut être également en aluminium, glissée dans une gorge en C que comporte le premier profilé sur son côté d'assemblage, et disposée par coulissement à l'emplacement choisi. La contreplaque d'appui est percée d'un trou dans lequel passe la vis, et elle est d'épaisseur correspondant à la profondeur de la gorge en C, en sorte de permettre le serrage de la vis sans risque de déformation par écrasement de ladite gorge en C. Le trou pratiqué dans le fond de la gorge en C pour le passage de la vis peut être prévu oblong dans le sens longitudinal du premier profilé, ce qui permet un jeu de réglage lors du montage.

De préférence, quand cela est possible, on prévoit d'utiliser au moins deux vis à visser dans le second profilé pour éviter des phénomènes pivotement axial de ce dernier.

Dans le domaine particulier du portail, il est nécessaire que celui-ci soit d'une grande rigidité pour résister aux contraintes auxquelles il est soumis, notamment par grand vent.

Cependant, si jusqu'à maintenant tous les systèmes d'assemblage offraient une rigidité suffisante, il n'en est plus de même depuis que la demande s'oriente vers des portails pleins et de grandes dimensions, ce qui accroît les contraintes et ne permet pas d'éviter un gauchissement.

Malgré tous les inconvénients qu'ils comportent, seuls les systèmes d'assemblage mettant en oeuvre des usinages de précision et des opérations de vissage et/ou de soudage, semblent offrir la rigidité demandée.

La présente invention a pour but de remédier à cet inconvénient, en proposant un système d'assemblage autorisant une grande rigidité de construction, tout en ne nécessitant pas d'usinage de précision, en permettant un réglage sur site et en restant démontable, et tout en étant restant financièrement compétitif.

Le système d'assemblage de deux profilés extrudés, en aluminium ou similaire, selon l'invention, où l'un des deux profilés, dit le premier, est destiné à être solidarisé à l'autre profilé, dit le second, par une mise contact de l'une de ses extrémités avec une face latérale dudit second profilé, ladite face latérale comprenant une gorge en C adaptée pour loger, après coulissement, une contreplaque d'appui percée d'au moins un trou pour le passage d'une vis traversant le fond de ladite gorge en C par trou, et destinée à être vissée dans l'extrémité d'une rainure tubulaire ou partiellement tubulaire de type alvéolis ou gorge de vissage que comporte ledit premier profilé, se caractérise en ce que ladite contreplaque d'appui est associée à une clavette, de forme et de dimensions périphériques lui permettant une insertion sans jeu, au moins transversalement dans une partie de l'espace interne de l'extrémité dudit premier profilé, et comportant, faisant saillie de sa face destinée à venir au contact de ladite face latérale, un élément d'épaisseur correspondant à celle de la paroi de ladite face latérale et de largeur lui permettant de se loger étroitement dans l'ouverture de la gorge en C, et dont une partie extrême, dans le sens de la longueur, déborde ladite clavette pour venir au droit de l'extrémité de la rainure tubulaire ou partiellement tubulaire de type alvéolis ou gorge de vissage dudit premier profilé, sans en occulter l'orifice de vissage.

On comprendra que la contreplaque et la clavette sont assemblées pour former une seule pièce qui s'étend étroitement à la fois dans le premier et dans le second profilé, assurant ainsi une plus grande rigidité. L'élément encastré dans l'ouverture de la gorge en C interdit le pivotement, tandis que le maintien en place de la clavette est assuré par le coincement de la partie de l'élément débordant ladite clavette entre l'extrémité de la rainure de vissage et la contreplaque.

D'autre part, la vis, préférentiellement plusieurs, qui traverse le fond de la gorge en C du second profilé, et vissée dans l'extrémité d'une rainure tubulaire ou partiellement tubulaire de type alvéolis ou gorge de vissage du premier profilé, permet de garantir le maintien de la forme de l'assemblage, car même en cas de desserrement sa présence empêche un coulissement.

De plus encore, le système d'assemblage selon l'invention ne nécessite pas que le premier profilé présente au moins deux gorges en C, sur deux faces opposées, il peut très bien ne comporter aucune gorge en C, ce qui peut être utile du point de vue esthétique.

Selon une caractéristique additionnelle du système d'assemblage selon l'invention, l'élément qui fait saillie de la clavette présente une épaisseur supérieure à celle de la paroi du profilé au niveau de la gorge en C, la différence d'épaisseur étant compensée par une cavité pratiquée en regard dans la contreplaque.

Cela permet un emboîtement de la clavette dans la contreplaque, assurant un accroissement de rigidité.

Selon une autre caractéristique additionnelle du système d'assemblage selon l'invention, l'élément qui fait saillie de la clavette se présente sous la forme d'un bloc parallélépipédique, s'insérant parfaitement dans l'ouverture de la gorge en C.

Selon une autre caractéristique additionnelle du système d'assemblage selon l'invention, la contreplaque et la clavette comportent des moyens mutuels d'emboîtement, localisés extérieurement à l'ouverture de la gorge en C, ladite clavette comportant au moins un élément saillant conçu apte à être introduit dans un logement que comporte ladite contreplaque, après passage dans au moins un usinage réalisé dans la paroi de la face latérale, extérieurement à l'ouverture de la gorge en C.

Si ce mode de réalisation nécessite des opérations d'usinage, celles-ci n'ont pas besoin d'être d'une grande précision, puisqu'il n'est pas question d'emboîtement mais de liberté de passage.

Selon un mode de réalisation préférentiel du système d'assemblage selon l'invention, la clavette comporte deux éléments saillants, disposés de part et d'autre de l'ouverture de la gorge en C et la contreplaque deux logements.

Cela permet d'accroître la cohésion de la contreplaque avec la clavette, et également d'empêcher une ouverture de la gorge en C sous la contrainte.

En fonction des caractéristiques structurelles du second profilé, la contreplaque et la clavette peuvent être configurées pour utiliser plusieurs vis. Il est également possible d'envisager d'utiliser une seule contreplaque avec plusieurs clavettes.

Lors de la réalisation d'un cadre comportant plusieurs premiers profilés assemblés à un même second profilé, le système d'assemblage selon l'invention permet un parfait alignement desdits premiers profilés.

Par ailleurs, si les premier et second profilés ne sont pas destinés à être assemblés perpendiculairement l'un par rapport à l'autre, on utilise une clavette dont le trou, ou les trous, de passage de vis est conformé pour autoriser un débattement angulaire dans le plan axial dudit second profilé.

Les avantages et les caractéristiques du système d'assemblage selon l'invention, ressortiront plus clairement de la description qui suit et qui se rapporte au dessin annexé, lequel en représente un mode de réalisation non limitatif

Dans le dessin annexé :
- la figure 1 représente une vue en perspective et en éclaté d'un système d'assemblage selon l'invention,
- la figure 2 représente une vue en plan d'un élément d'un même système d'assemblage,
- la figure 3 représente une vue en coupe selon l'axe XX' de la figure 2
- la figure 4 représente une vue en perspective et en éclaté d'une variante de réalisation du système d'assemblage selon l'invention,
- la figure 5 représente une vue en perspective et en éclaté d'une autre variante de réalisation du système d'assemblage selon l'invention,
- la figure 6 représente une vue en perspective et en éclaté d'une autre variante de réalisation du système d'assemblage selon l'invention,

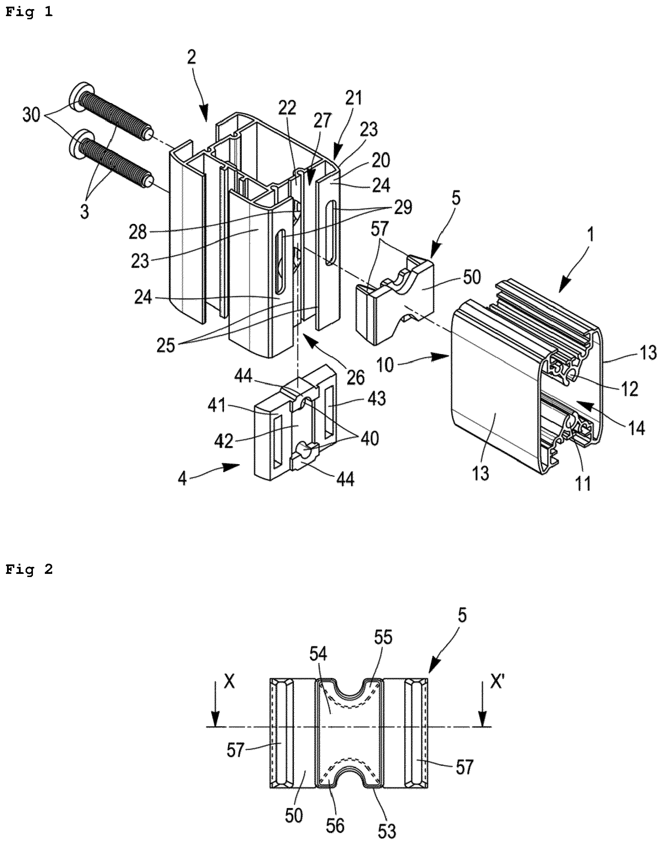

En référence à la figure 1 on peut voir d'une part un premier profilé 1, destiné à être disposé à l'horizontale et qui sera défini comme traverse, et d'autre part un second profilé 2, destiné à être disposé verticalement et qui sera défini comme montant. Le système d'assemblage selon l'invention est destiné à réaliser la solidarisation de la traverse 1 au montant 2, et plus particulièrement, d'une extrémité 10 de la traverse 1 sur un côté du montant 2.

La traverse 1 et le montant 2 consistent en des profilés en aluminium ou alliage d'aluminium issus d'extrusion.

La traverse 1 présente, non limitativement, la particularité d'être de section globalement rectangulaire, et de comporter intérieurement deux rainures partiellement tubulaires 11 et 12 de type alvéolis, alignées centralement et parallèlement aux grands côtés 13 de la section, et séparées par un espace 14.

Le montant 2 présente, non limitativement, la particularité d'être section globalement rectangulaire, de comporter sur un côté 20, celui auquel doit être accolée et fixée l'extrémité 10 de la traverse 1, une gorge en C 21, à savoir qu'elle comprend un fond 22, de chacun des bords duquel s'étend vers l'extérieur une cloison 23 prolongée d'une aile 24, parallèle au fond 22. Les bords libres 25 des ailes 24, délimitent la largeur d'une ouverture 26 donnant accès à un espace intérieur 27.

On notera que dans le mode de réalisation représenté, le montant 2 comporte, non exclusivement, une gorge en C 21 sur trois de ses côtés.

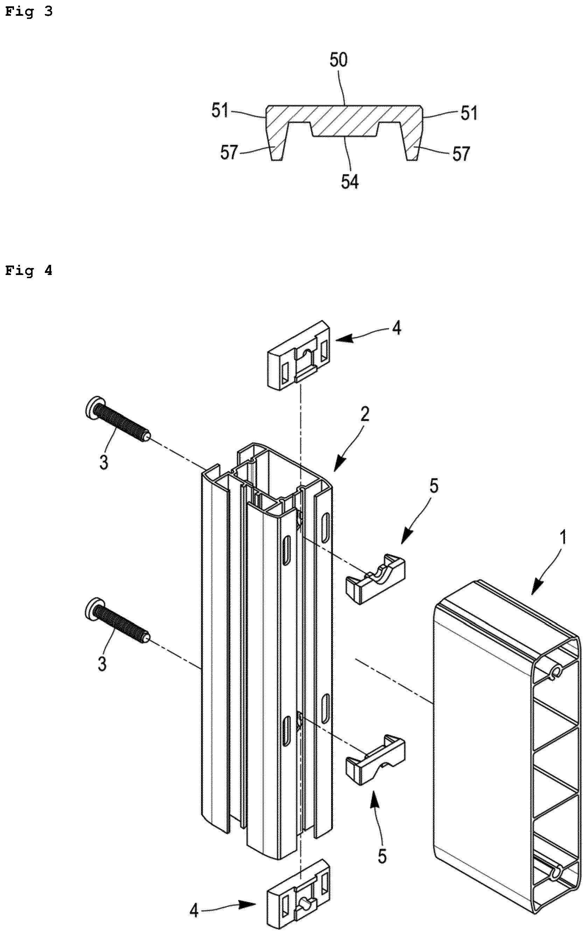

Le système d'assemblage selon l'invention comprend, outre deux vis 3, une contreplaque 4 et une clavette 5, cette dernière étant également représentée sur les figures 2 et 3.

De manière analogue à un assemblage de l'état de la technique, la contreplaque 4 se présente sous la forme d'une pièce de section lui permettant d'être glissée étroitement dans la gorge en C 21, et comportant au moins un trou 40, en l'occurrence deux, permettant le passage des vis 3 destinées à être vissées dans les alvéolis 11 et 12, le fond 22 de la gorge en C 21 comportant deux trous 28 permettant chacun le passage des têtes 30 des vis 3 pour que celles-ci viennent serrer la contreplaque 3 contre la traverse 1 en enserrant les ailes 24. En cas de desserrement des vis 3, le fait qu'elles soient engagées dans les trous 28 empêche le coulissement dans la gorge en C 21, dans la limite des dimensions de ces trous 28.

Selon la présente invention, le système d'assemblage comprend de plus une clavette 5, qui se présente sous la forme d'une plaque 50 de forme périmétrique lui permettant de prendre place dans l'espace 13 de la traverse 1. Cette insertion est faite de préférence avec un minimum de jeu, notamment dans le sens transversal, les bords latéraux 51 venant au contact intérieurement des côtés 13, tandis que les bords supérieur 52 et inférieur 53 sont conformés pour contourner les alvéolis, respectivement 11 et 12.

Cette plaque 5 comporte, faisant saillie de la face opposée à celle introduite dans l'espace 14, un bloc parallélépipédique 54, de largeur lui permettant une introduction dans l'ouverture 26, et d'épaisseur au moins égale à celle des ailes 24, mais de préférence supérieure, et dont les bords extrêmes 55 et 56, débordent les bords respectivement 52 et 53.

En ce qui concerne la contreplaque 4, elle comporte, entre les trous 40, sur sa face 41 destinée à venir au droit de l'ouverture 26, un évidement 42 aux dimensions périphériques correspondant à celle du bloc 54.

De plus, dans le mode de réalisation représenté, la clavette 5 comporte, faisant saillie de part et d'autre du bloc 54, deux doigts 57, tandis que d'une part la contreplaque 4 comporte de part et d'autre de l'évidement 42, deux cavités 43 susceptibles de loger étroitement les extrémités des doigts 57, et que d'autre part, des ouvertures 29 sont pratiquées dans les ailes 24.

Lors de l'assemblage, la contreplaque 4 est glissée dans la gorge en C 21 du montant 2, la clavette 5 lui est associée par introduction des doigts 57 dans les cavités 43 en passant par les ouvertures 29, et également par engagement du bloc 54 dans l'évidement 42 en passant dans l'ouverture 26, tandis que la plaque 50 est introduite dans l'espace 14 de la traverse 1, les extrémités des alvéolis 11 et 12 venant s'appliquer contre les bords extrêmes 55 et 56 du bloc 54, pour venir pincer et immobiliser la clavette 5. Les vis 3 sont ensuite vissées dans les alvéolis 11 et 12 en étant serrées contre la contreplaque 4, on notera que les bords extrêmes 55 et 56 du bloc 54 sont configurés pour permettre le passage des vis 3, à savoir qu'ils comportent chacun une découpe en arc de cercle.

On notera également que l'évidement 42 est bordé supérieurement et inférieurement de proéminences 44, d'une épaisseur correspondant à celle des ailes 24, et destinées à venir en appui contre les alvéolis 11 et 12.

On comprendra que la contreplaque 4 et la clavette 5 forment, après serrage des vis 3, une pièce unique introduite à la fois dans la gorge en C 21 et dans l'espace 14, la contreplaque 4 étant bloquée dans la gorge en C 21 du montant 2, tandis que la clavette est bloquée dans la traverse 1, en sorte d'assurer l'impossibilité de pivotement de la traverse 1 sur le montant 2.

De plus, cela permet un parfait alignement de la traverse 1 par rapport à l'axe du montant 2. En effet, lors du montage, la contreplaque 4 et la clavette 5 servent avantageusement de guide de centrage, et permettent de centrer automatiquement la traverse1 sur le montant 2.

On notera également que le système d'assemblage selon l'invention autorise le montage d'un châssis verticalement, la clavette 5 permettant de maintenir la contreplaque 4 pendant le montage, lui évitant ainsi de tomber pendant le réglage vertical.

Il y a lieu de noter que dans une version plus simple, non représentée, qui notamment ne nécessite pas d'opération d'usinage pour la réalisation des ouvertures 29, la clavette 5 ne comporte pas les doigts 57, son assemblage à la contreplaque 4 et son blocage en rotation étant assuré par l'engagement du bloc 54 dans l'évidement 42.

La présence des doigts 56 offre toutefois l'avantage, outre une solidarisation accrue entre la clavette 5 et la contreplaque 4, de maintenir la gorge en C 21 et d'empêcher son évasement.

En référence aux figures 4, 5 et 6, on peut voir des variantes du système d'assemblage selon l'invention.

Sur la figure 4, la traverse 1 étant de grande hauteur, on utilise un ensemble comprenant une contreplaque 4 et une clavette 5 en partie haute, et un autre ensemble comprenant une contreplaque 4 et une clavette 5 en partie basse, chacun de ces ensembles étant conformé pour être utilisé avec une seule vis 3.

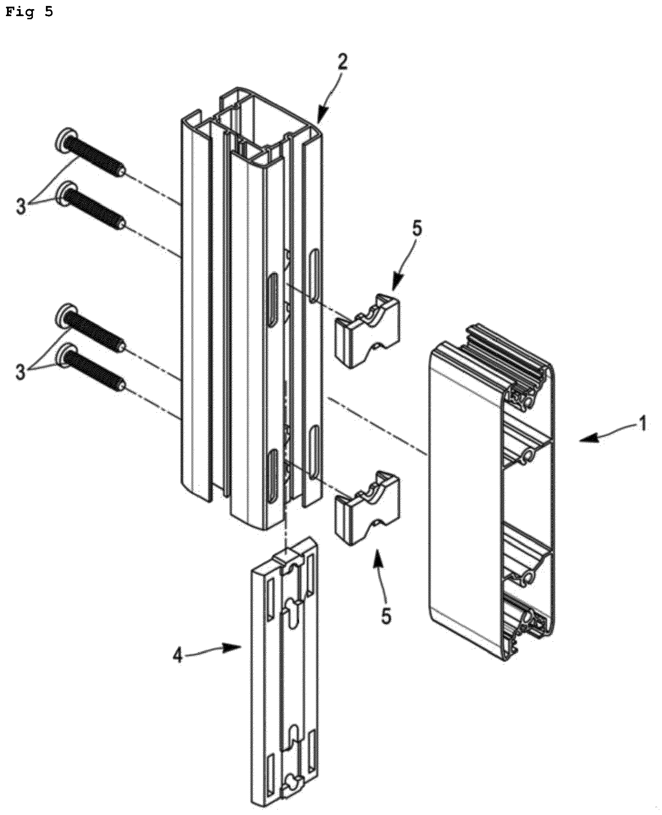

Sur la figure 5, la traverse 1 est également de grande hauteur, on utilise une contreplaque 4 de grande longueur, associée à deux clavettes 5, l'une disposée en partie haute et l'autre en partie basse, chacune des clavettes 5 étant conformée pour coopérer avec deux vis 3.

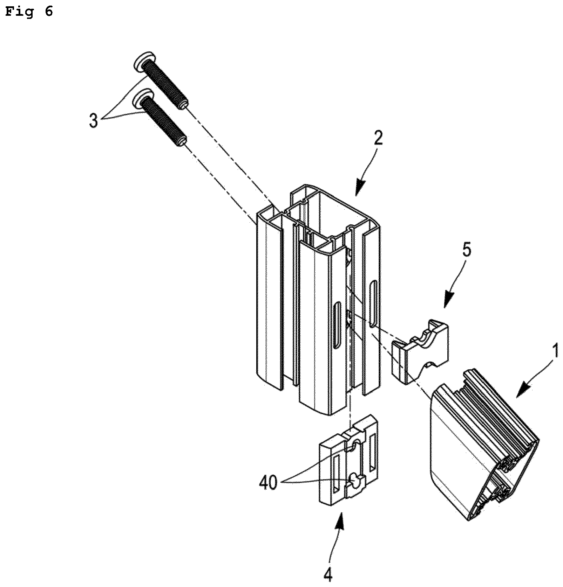

En référence maintenant à la figure 6, on peut voir l'assemblage d'une traverse 1 à un montant 2, où la traverse 1 n'est pas perpendiculaire au montant 2, mais faisant un angle dans un plan axial du montant 2.

Dans ce cas on utilise une contreplaque 4 dans laquelle les trous 40 autorisent un débattement angulaire, en étant oblongs par exemple.

Quel que soit le mode de réalisation du système d'assemblage selon l'invention, les cadres obtenus présentent une meilleure tenue au gauchissement, et sont aisément montables et démontables sur site.

## Revendications

1. Système d'assemblage de deux profilés métalliques, extrudés, en aluminium ou similaire, où l'un (1) des deux profilés, dit le premier, est destiné à être solidarisé à l'autre profilé (2), dit le second, par une mise contact de l'une de ses extrémités (10) avec une face latérale (20) dudit second profilé (2), ladite face latérale (20) comprenant une gorge en C (21) adaptée pour loger, après coulissement, une contreplaque d'appui (4) percée d'au moins un trou (40) pour le passage d'une vis (3) traversant le fond (22) de ladite gorge en C (21) par un trou (28), et destinée à être vissée dans l'extrémité d'une rainure tubulaire ou partiellement tubulaire de type alvéolis (11, 12) ou gorge de vissage que comporte ledit premier profilé (1), **caractérisé en ce que** ladite contreplaque d'appui (4) est associée à une clavette, (5) de forme et de dimensions périphériques lui permettant une insertion sans jeu, au moins transversalement dans une partie de l'espace interne (14) de l'extrémité (10) dudit premier profilé (1), et comportant, faisant saillie de sa face destinée à venir au contact de ladite face latérale (20), un élément (54) d'épaisseur correspondant à celle de la paroi de ladite face latérale (20) et de largeur lui permettant de se loger étroitement dans l'ouverture (26) de la gorge en C (21), et dont une partie extrême (55, 56), dans le sens de la longueur, déborde ladite clavette (5) pour venir au droit de l'extrémité de la rainure tubulaire ou partiellement tubulaire de type alvéolis (11, 12) ou gorge de vissage dudit premier profilé (1), sans en occulter l'orifice de vissage.

2. Système d'assemblage selon la revendication 1, **caractérisé en ce que** l'élément (54) qui fait saillie de la clavette (5) présente une épaisseur supérieure à celle de la paroi du profilé au niveau de la gorge en C (21), la différence d'épaisseur étant compensée par une cavité (42) pratiquée en regard dans la contreplaque (4).

3. Système d'assemblage selon la revendication 1 ou la revendication 2, **caractérisé en ce que** l'élément (54) qui fait saillie de la clavette (5) se présente sous la forme d'un bloc parallélépipédique, s'insérant parfaitement dans l'ouverture (26) de la gorge en C.

4. Système d'assemblage selon l'une quelconque des revendication 1 à 3, **caractérisé en ce que** la contreplaque (4) et la clavette (5) comportent des moyens mutuels d'emboîtement (43, 57), localisés extérieurement à l'ouverture (26) de la gorge en C, ladite clavette (5) comportant au moins un élément saillant (57) conçu apte à être introduit dans un logement (43) que comporte ladite contreplaque (4), après passage dans au moins un usinage (29) réalisé dans la paroi de la face latérale (20), extérieurement à l'ouverture (26) de la gorge en C (21) .

5. Système d'assemblage selon la revendication 4, **caractérisé en ce que** la clavette (5) comporte deux éléments saillants (57), disposés de part et d'autre de l'ouverture (26) de la gorge en C (21), et la contreplaque (4) deux logements (43).

6. Système d'assemblage selon l'une quelconque des revendications 1 à 5, **caractérisé en ce qu'**il comporte, pour la fixation d'un premier profilé (1), plusieurs contreplaques (4) et autant de clavettes (5).

7. Système d'assemblage selon l'une quelconque des revendication 1 à 5, **caractérisé en ce qu'**il comporte, pour la fixation d'un premier profilé, (1) une contreplaque (4) et plusieurs clavettes (5) .

8. Système d'assemblage selon l'une quelconque des revendication 1 à 5, **caractérisé en ce que** le trou (40), ou les trous, de passage de vis de la contreplaque (4), pour une fixation non perpendiculaire d'un premier profilé (1) à un second profilé (2), est conformé pour autoriser un débattement angulaire dans le plan axial dudit second profilé (2).
